# EUROPEAN PATENT SPECIFICATION

(11) **EP 3 424 367 B1**
(45) Date of publication and mention of the grant of the patent: **15.04.2020**
(21) Application number: 18182224.8
(22) Date of filing: 06.07.2018
(51) Int. Cl.: A47C 19/00, F16B 12/54, F16B 12/56

(54) **BED, BED FRAME, BED FRAME JOINT AND METHOD OF ASSEMBLING A BED FRAME**
BETT, BETTRAHMEN, BETTRAHMENVERBINDUNG UND VERFAHREN ZUM ZUSAMMENBAU EINES BETTRAHMENS
LIT, CADRE DE LIT, JOINT DE CADRE DE LIT ET PROCÉDÉ D'ASSEMBLAGE D'UN CADRE DE LIT

(30) Priority: 07.07.2017 SE 1750901
(43) Date of publication of application: 09.01.2019
(73) Proprietor: Bed Factory Sweden AB, 115 47 Stockholm (SE)
(72) Inventor: Stenberg, Karl, 115 47 Stockholm (SE)
(74) Representative: Bergenstråhle Group AB

(56) References cited:
- EP-A2- 0 740 084
- GB-A- 190 904 268
- US-A1- 2008 208 709
- US-B1- 8 990 979

## Description

### Technical field

The present invention relates to the manufacturing of beds and more particularly to a bed frame with joints facilitating a quick and easy method of assembling the bed frame.

### Background art

One kind of regular beds comprises a rectangular bed frame supporting a rectangular mattress. The bed frame comprises two long sections and two short sections. At the intersections between the long and short sections, a respective leg is provided to keep the frame at a distance from the surface on which the bed is placed.

A regular bed has in use a rather large volume, normally having a size of 80 times 200 centimeters or more. Transporting a bed in an assembled state poses problems as regards the logistics and storage. For example, a maximum of five packages, each with a weight of at the most 35 kilos, is a normal limitation on the freight. Even when a bed is transported in separate parts, such as mattress, frame, legs etc. it may be too bulky if not specifically designed for being transported.

This implies that a bed, in order to be transported, would benefit from being able to be transported in several different parts and to be assembled at the destination.

Also, it is preferable that the bed is quick and easy to assemble with no or a minimum of tools. Still, the assembled bed must be stable, with no or a minimum of distance between the frame sections.

Patent publication EP0740084 A2 discloses connector assemblies for furniture, such as bed frames. Connector blocks and pins are used for connecting the sides of the frame of the furniture to be assembled, wherein the pins are tapped by a hammer or other tool. GB4268 discloses metallic junction fittings for bedsteads or the like. US 8,990,979 B1 discloses a ready-to-assemble bed foundation with lamellas of corner blocks provided with lumens that are coaxial after assembly, so they can securely receive a pin. US2008/208709A1, discloses a frame joint comprising leg with a non-tapered attachment pin.

### Summary of invention

An object of the present invention is to provide a bed which is easy to transport and assemble and which, when assembled, is stable. Another object is to provide a method of assembling such a bed without the use of tools.

These objects are attained by the bed and method as described therein below.

Thus, according to the present invention there is provided a bed frame joint as defined in claim 1. Preferred features of the invention are set out in the dependent claims.

In a preferred embodiment, each of the first and second joint parts comprises a base and the discs extend perpendicularly from the base.

In a preferred embodiment, the holes are circular.

In a preferred embodiment, the sides of the holes are perpendicular to the plane of the discs.

In a preferred embodiment, one of the joint parts comprises a co-planar locating tab extending from the base and having a position and a size to cooperate with a locating recess provided in the other joint part.

In a preferred embodiment, one of the joint parts comprises an engagement tongue extending from the base at essentially right angle thereto to engage an engagement recess on the back of the base of the other joint part.

In a preferred embodiment, each of the discs is provided with an extension so that they exhibit a planar surface abutting the base of the other joint part.

According to the invention, the pin is provided with a circular base, from which a tapering stem portion extends.

In a preferred embodiment, the stem portion is made up of a plurality of flanges extending evenly spaced from a centerline of the stem portion.

According to the invention, the circular base is provided with a centrally located threaded hole adapted to receive a screw of a leg.

In a preferred embodiment, the discs have a non-uniform thickness, wherein the discs preferably are thicker close to the base than at the end remote from the base and wherein the discs preferably are thinner close to the base of the joint part to which the joint part in question is joined.

According to a second aspect of the invention, a bed frame is provided comprising four frame sections and a bed frame joint according to the invention provided at each intersection between two adjacent frame sections.

According to a third aspect of the invention, a bed is provided comprising a bed frame according to the invention.

According to a fourth aspect of the invention, a method of assembling a frame joint according to the invention is provided, the method comprising the following steps: aligning the holes of the first and second joint parts; inserting the pin into the holes; and applying a pressure to the pin until fully inserted into the holes wherein the pressure preferably is at least partly provided by the weight of the bed frame.

In a preferred embodiment of the method, the step of applying a pressure to the pin includes slightly deforming the rims of the holes.

### Brief description of drawings

The invention is now described, by way of example, with reference to the accompanying drawings, in which:
Fig. 1 is an overall view of a bed frame according to the invention;
Fig. 2 is a detailed view of a joint for the assembly of the bed frame shown in Fig. 1;
Fig. 3 is a side view of a first joint part comprised in the joint shown in Fig.2;
Fig. 4 is a perspective view of a second joint part comprised in the joint shown in Fig. 2;
Fig. 5 is a perspective view of a pin comprised in the joint shown in Fig. 2;
Fig. 6 is a side view of the pin of Fig. 5;
Fig. 7 is a perspective view of the joint of Fig. 2 just before assembly;
Fig. 8 is a detailed view of an engagement arrangement of the joint of Fig. 2;
Fig. 9 is a view showing the engagement arrangement and a location arrangement of the joint when assembled;
Fig. 10 shows a close-up of the engagement arrangement in assembled state of the joint;
Fig. 11 is a cross-sectional view of the joint when assembled, showing the function of the engagement arrangement;
Fig. 12 shows the first and second joint parts joined before final assembly of the joint;
Fig. 13 is a sectional view of the assembled joint;
Fig. 13a is a close-up part of Fig. 13 showing the interaction between the joint parts and the pin;
Figs. 14 and 15 show an alternative embodiment of a first joint part;
Figs. 16 and 17 show an alternative embodiment of a second joint part;
Figs. 18a and 18b show an alternative embodiment of a pin for assembling the first and second joint parts;
Fig. 19 shows the assembled joint parts shown in Figs. 14 -17; and
Figs.20a and 20b show an alternative embodiment of joint parts.

### Description of embodiments

In the following, a detailed description of a bed, a bed frame, a bed frame joint and a method of assembling the bed frame according to the invention will be given

In this description, when referring to directions, such as "upper" or "lower", what is referred to is to the direction in normal used shown in the figures.

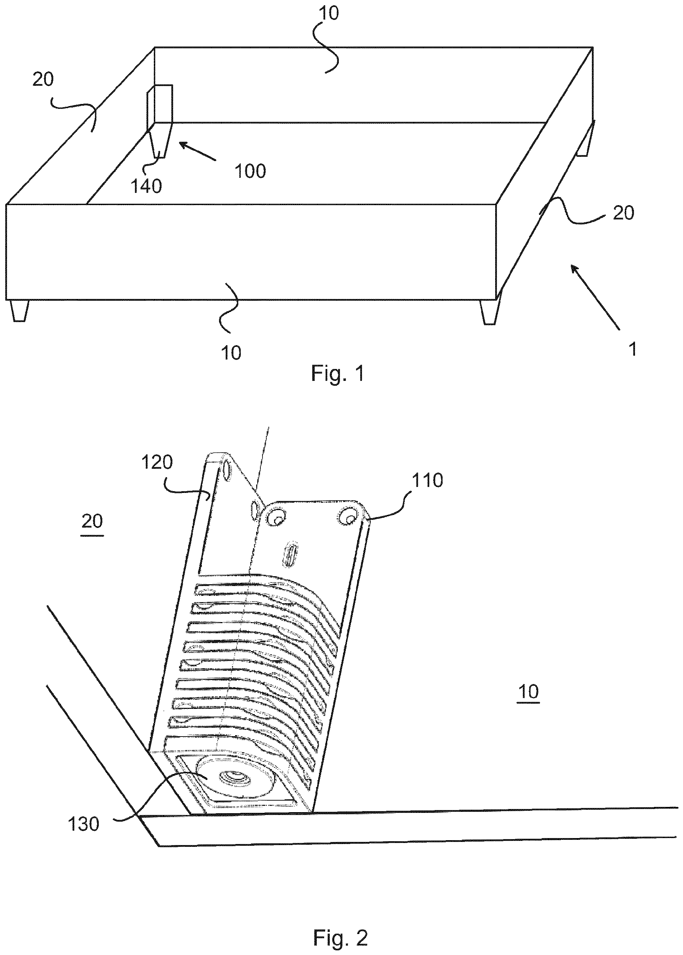

Fig. 1 is an overall view of a bed frame according to the invention, generally designated 1. The frame 1 comprises four sections: two first, long frame sections 10 and two second, short frame sections 20. It will be realized that the relative length of the frame sections may vary with the application and also that for some bed sizes all frame sections may have the same length. Thus, in this description a "long" section and a "short" section refers to two sections which meet at a corner of the bed frame.

A frame joint 100 is provided at each intersection between two adjacent frame sections 10, 20. In Fig. 1, only one such joint 100 is shown but there are in total four joints, one at each intersection or corner of the bed frame. The function of these joints is to hold two adjacent frame sections 10, 20 firmly together. When a leg 140 is attached to each joint 100, the frame sections 10, 20 are kept at a distance from the surface on which the bed frame is provided.

Reference is now made to Fig. 2, showing a detailed perspective view of a frame joint 100. The frame joint 100 comprises to joint parts: a first joint part 110 attached to a first frame section 10 and a second joint part 120 attached to a second frame section. The first and second joint parts 110, 120 are kept together by means of a pin 130, as will described below. A leg (not shown in this figure) is preferably attached to the pin when the bed frame is assembled.

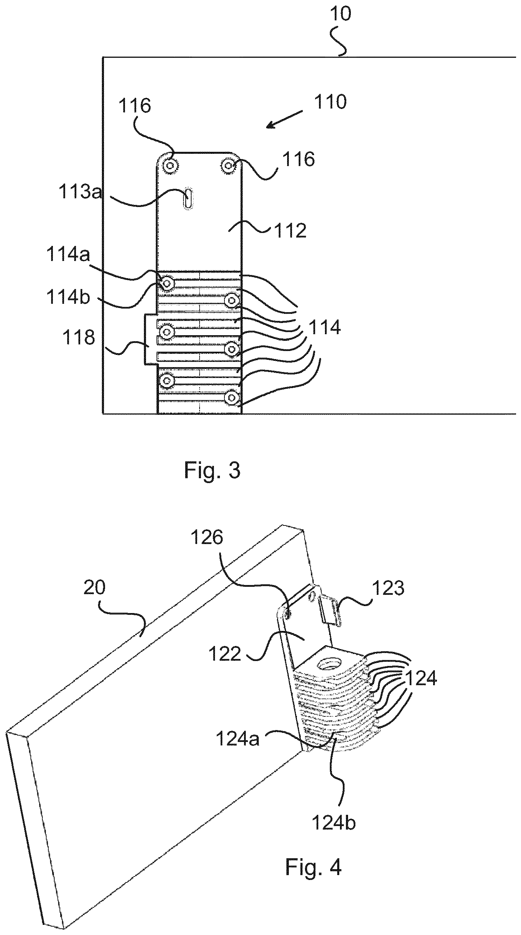

The function and assembly of the frame joint will now be explained in detail with reference to Figs. 3-13. In Fig. 3, a side view of a first joint part 110 is shown. The first joint part comprises a base 112, which is adapted to be fastened to a first, long frame section 10. A plurality of discs 114, in the shown example nine discs, extend perpendicularly from the base 112. The discs are provided, one above the other as seen in assembled state, so that they form an array of discs 114. Each of the discs 114 is provided with a hole, preferably a circular hole 115, arranged essentially centrally in the disc, as indicated by the dashed lines. As shown in the figure, the holes have a successively smaller diameter, seen from the bottom one and up to the top one.

The first joint part 110 is attached to the frame section by means of a plurality of screws extending through a respective mounting hole 116 in the base 112. In the shown embodiment, eight holes are provided: two at the upper portion of the base 12 and six between the discs 114. Thus, it is preferred to place at least some of the mounting holes 116 between the discs 114, to minimize the leverage during use. In order to give space for the screws, upper and lower recesses 114a, 114b aligned with the holes 116 are provided in the discs.

A co-planar locating tab 118 extends from the base at the lower half portion thereof. This locating tab 118 has a position and a size to cooperate with a locating recess provided in the second joint part, as explained below.

Finally, a disassembly hole 113a is provided in the base 112 to give access to an engagement tongue of the second joint part, also explained below.

Fig. 4 shows a perspective view of a second joint part 120, attached to a second, short frame section 20. The second joint part comprises a base 122, which is adapted to be fastened to a frame section. A plurality of discs 124, in the shown example nine discs, extend perpendicularly from the base 122. The discs are provided, one above the other as seen in assembled state, so that they form an array of discs 124. Each of the discs 124 comprises a hole, preferably a circular hole 125, arranged essentially centrally in the disc. Like in the first joint part 110, the holes have a successively smaller diameter, seen from the bottom one and up to the top one. The discs 124 of the second joint part 120 are arranged on the base 122 so that they are staggered in relation to the discs 114 of the first joint part 110 when the bases 112, 122 of the first and second joint parts 110, 120 are in alignment, i.e., when the upper and lower edges of the bases are at the same height.

The second joint part 120 is attached to the frame section by means of a plurality of screws extending through a respective hole 126 in the base 122. In the shown embodiment, eight holes are provided: two at the upper portion of the base 122 and six between the discs 124. In order to give space for the screws, upper and lower recesses 124a, 124b are provided in the discs aligned with the holes 126.

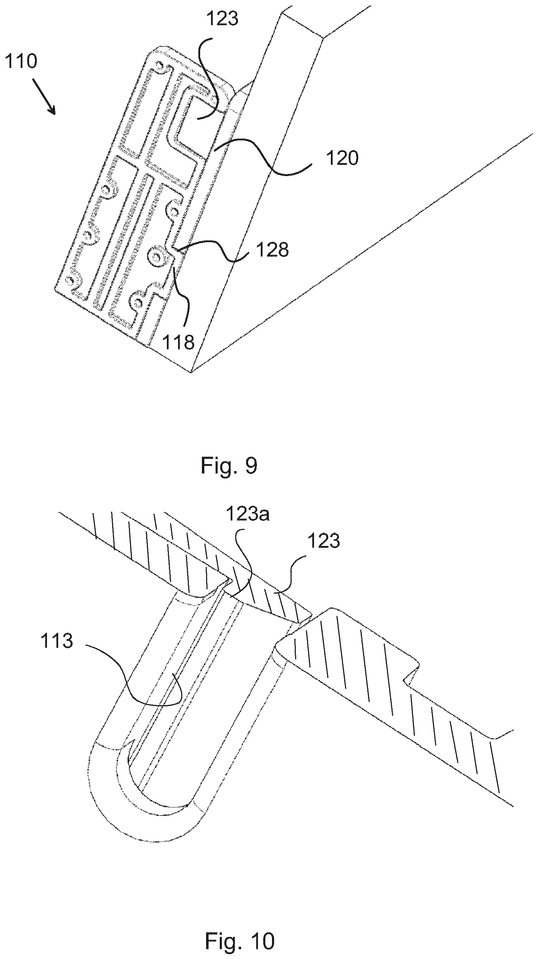

A locating cut-out 128, see Fig. 9, is provided in the base 122 at the lower half portion thereof. This locating cut-out 128 has a position and a size to cooperate with the locating tab 118 provided on the first joint part.

Finally, an engagement tongue 123 extend from the base 122 at essentially right angle thereto to engage an engagement recess 113 on the back of the base 112 of the first joint part.

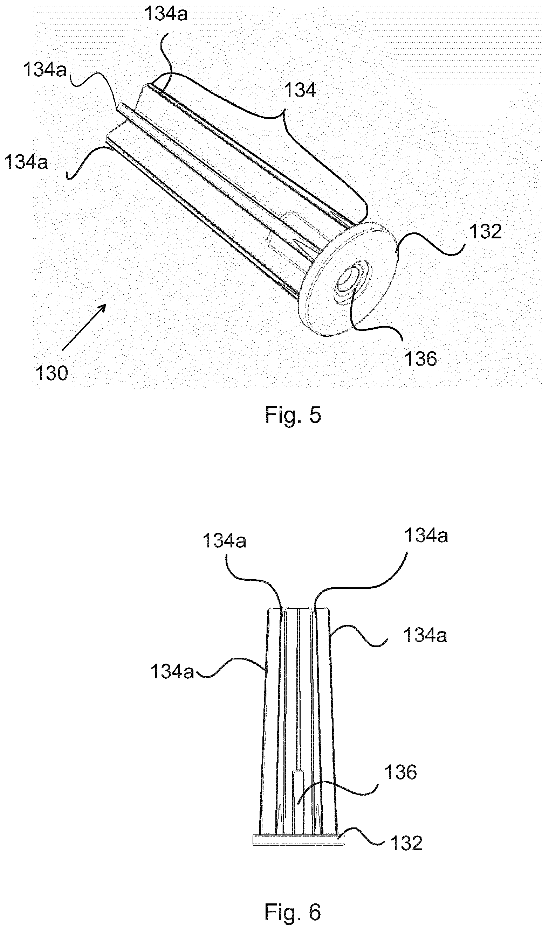

Referring now to Fig. 5, a pin 130 is provided with a circular base 132, from which a tapering stem portion extends 134. In this embodiment, the stem portion is made up of a plurality of flanges 134a, preferably six flanges. The flanges 134a are provided so that they extend evenly spaced from the centerline of the stem portion 134. In other words, the cross-sectional shape of the stem portion 134 is star-shaped in this embodiment. Thereby, a pin with low weight is provided with essentially maintained strength. Also, a star-shaped cross-sectional shape assists cooling the pin during manufacturing.

The circular base 132 is provided with a centrally located threaded hole adapted to receive a screw of a leg (not shown in this figure).

A side view of the pin 130 is shown in Fig. 6.

The parts forming the joint 100, i.e., the first and second joint parts 110, 120 and the pin 130 are preferably made of plastic material.

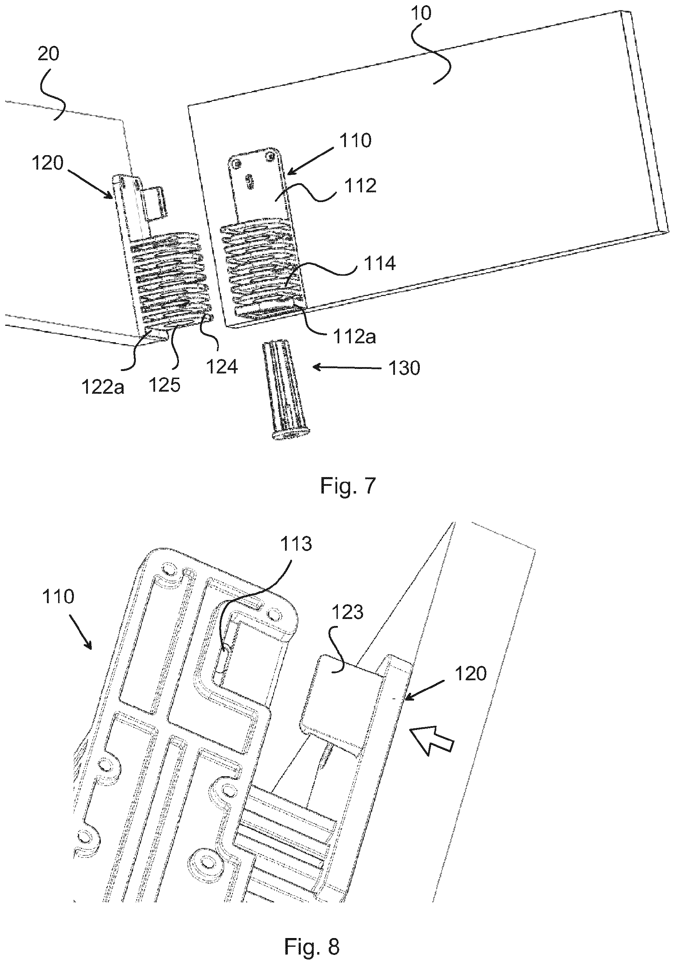

The method for assembling the joint 110 will now be explained in detail, starting with reference to Fig. 7. This figure shows a first joint portion 110 which has been attached to a long frame section 10 by means of screws so that the lower edge 112a of the base 112 is essentially flush with the lower edge of the long frame section 10.

Correspondingly, a second joint portion 120 has been attached to a short frame section 20 by means of screws so that the lower edge 122a of the base 122 is essentially flush with the lower edge of the short frame section 20. A pin 130 is ready for insertion into the holes 115, 125 in the discs 114, 124.

From this position, the long and short frame sections 10, 20 are moved towards each other so that the holes 115 in the first joint part 110 are becoming aligned with the holes 125 in the second joint part 120. During this process, see Fig. 8, the second joint part 120 is moved towards the first joint part 110 so that the engagement tongue 123 starts to engage the engagement recess 113 in the first joint part 110. As shown in this figure, the outer portion of the engagement tongue 123 is provided with an engagement flange 123a adapted to be locked in the engagement recess 113.

Fig. 9 shows complete engagement between the engagement recess 113 and the engagement tongue 123. By means of the engagement of the engagement flange 123a in the engagement recess 113, the first and second joint parts 110, 120 are kept together for further assembly. Also, as shown in Fig. 9, the locating tab 118 of the first joint part 110 is in engagement with the locating cut-out 128 in the second joint part 120, ensuring that the two joint parts, and thereby the two frame sections 10, 20, are on the same level.

Fig. 10 shows a detailed sectional view showing the engagement between the engagement recess 113 and the engagement tongue 123.

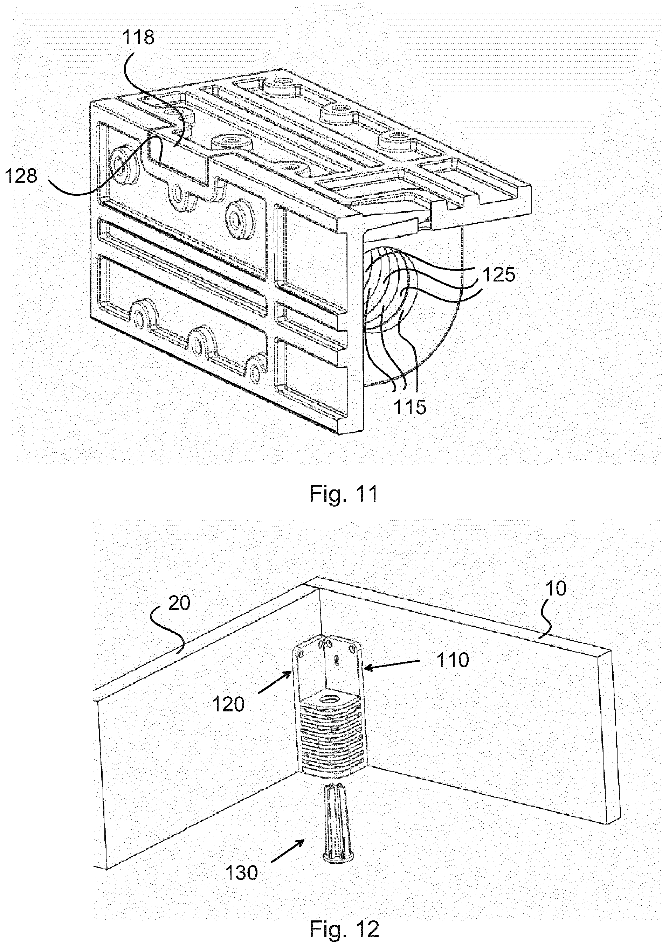

Fig. 11 shows that the circular holes 115, 125 in the discs 114, 124 have been aligned or essentially aligned during the assembly process, so that they together form a step-wise tapering hole.

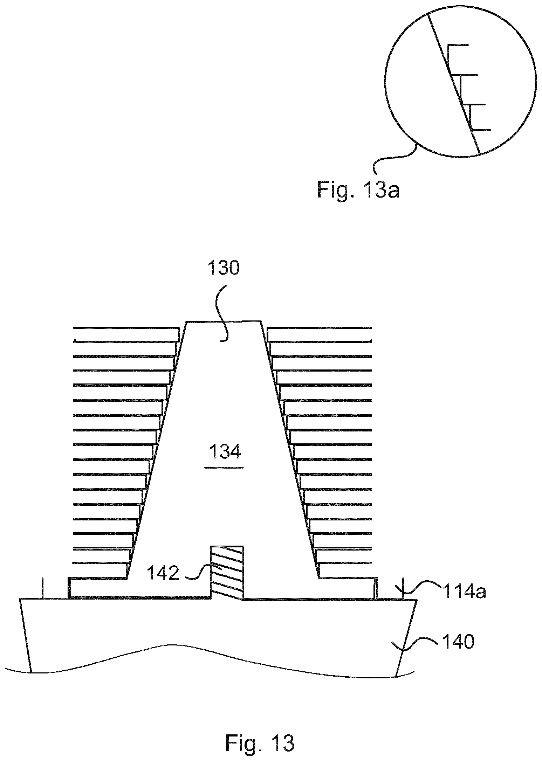

In this state wherein the first and second joint parts 110, 120 have been joined but not securely locked to each other, the discs 114, 124 thereof form a block made up of interleaved discs, with a hole extending through the block which tapers from the bottom and to the top. The pin 130 is now ready to be inserted into this tapering hole for securely locking the two joint parts 110, 120 together, as will be explained with reference to Fig. 13, showing a sectional view through the assembled joint with the pin 130 inserted. In this figure, it is shown how the successively smaller holes 115, 125 form a step-wise tapering hole. In this figure, the tapering is shown exaggerated, to assist understanding of the invention. The steps are formed by providing the sides of the holes 115, 125 perpendicular to the plane of the discs, i.e., each portion of the tapering hole for the pin made up of a single disc 114, 124 is vertical.

A leg 140 is attached to the pin 130 by means of a screw 142 integral with the leg 140 and being screwed into the hole 136 in the base 132 of the pin. In the preferred embodiment, the screw 142 is longer than the threaded portion of the hole 136, so that the distal, upper end portion of the screw 142 presses into the material of the pin 130, causing a slight deformation thereof. This results in a firmer and more stable connection between the pin 130 and the leg 140. The leg 140 is preferably attached to the pin 130 before insertion thereof into the holes 115, 125.

When pressure is applied to the pin 130 from below, the rims of the holes 115, 125 are slightly deformed, as shown in the close-up of Fig. 13a. Thereby, the pressure between the discs 114, 124 and the pin 130 is concentrated to a small area, in turn resulting in a high pressure and thereby very firm grip therebetween. This ensures that the discs 114, 124 of the two joint parts 110, 120 are aligned with high accuracy, resulting in a very firm and tight joint between two adjacent frame sections 10, 20.

The thicknesses of the discs 114, 124 have not been discussed. Basically, they have the same thickness. This means that the spacing between two adjacent discs of one of the joint parts 110, 120 is slightly larger than this thickness to allow interleaving of the discs from the two different joint parts 110, 120. However, the lowermost disc of the first joint part 110, i.e., the lowermost disc in the assembled joint 100, is preferably provided with an outer flange 114a facing downward toward the upper surface of the leg 140, thus forming a support improving the stability of the bed frame. Preferably, the leg 140 is sized so that it partly abuts the underside of the frame sections 10, 20, thereby relieving the joint parts 110, 120 from taking up all the force during use of the bed frame.

During assembly, the pin 130 is driven by hand into the holes 115, 125 until an engagement is achieved. However, when all four corners of the bed frame have been assembled and the bed frame rests on the four legs 140, the joint is further tightened by the force exerted from above during use of the bed. In other words, the pressure on the pin is at least partly provided by the weight of the bed frame. In this way, the joint 100 described above is a self-tightening joint.

It is envisaged that a bed frame in the form of frame sections 10, 20 with pre-attached joint parts 110, 120 can be assembled in less than a minute.

Disassembly of the bed frame 1 is also possible in a very convenient way. A force is applied to the upper end of the pin 130, for example by means of a hammer, so that the stem portion 134 is driven out from the holes 115, 125. Then the engagement tongue 123 is brought into disengagement with the engagement recess 113 by the insertion of an object, such as a screwdriver or a knife, into the disengagement hole 113a shown in Fig. 3, pushing the engagement flange 123a inward. With the pin 130 removed and the engagement recess 113 and engagement tongue 123 out of engagement, the first and second joint parts 110, 120 can be disengaged by simply pulling the first and second frame sections 10, 20 apart.

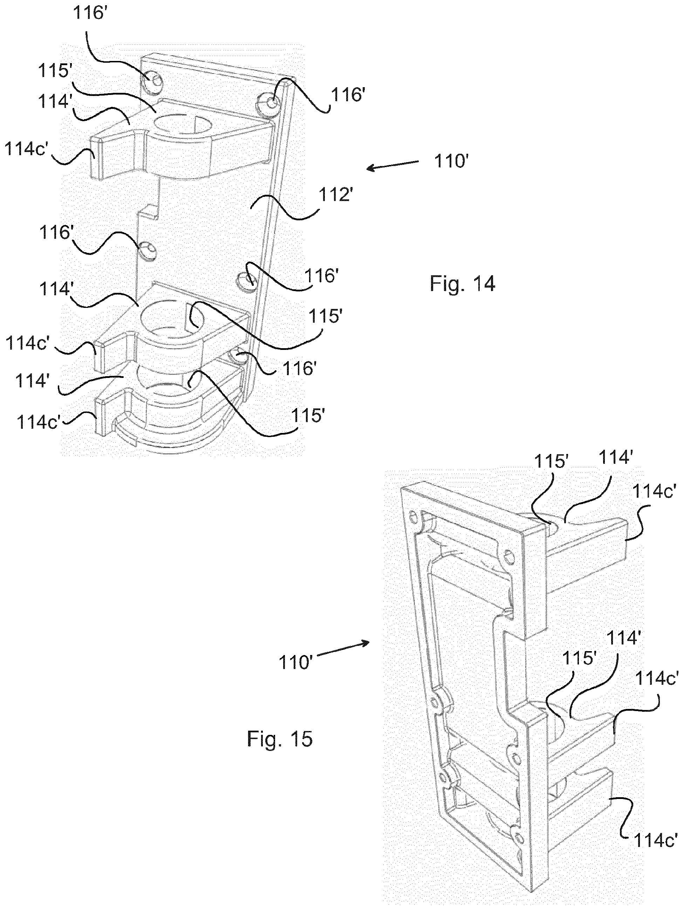

Alternative embodiments of joint parts and pin will now be described with reference to Figs. 14-19. The general design and function of these alternative embodiments is the same as for the embodiments described above with reference to Figs. 2-13. Thus, the first joint part 110' shown in Figs. 14 and 15 comprises a base 112' which is adapted to be fastened to a first, long frame section 10, see Fig. 1. A plurality of discs 114', in the shown example three discs, extend perpendicularly from the base 112'. The discs are provided, one above the other as seen in assembled state, so that they form an array of discs 114'. Each of the discs 114' is provided with a hole, preferably a circular hole 115', arranged essentially centrally in the disc. As shown in the figure, the holes have a successively smaller diameter, seen from the bottom one and up to the top one. Unlike in the first embodiment, the thickness of the discs is not the same for all the discs. Also, in this embodiment the diameter of the holes varies with the height so that it conforms with the diameter of the tapered pin. In other words, the holes have a larger diameter on the underside of the discs as compared with on the upper side.

The first joint part 110' is attached to the frame section by means of a plurality of screws extending through a respective mounting hole 116' in the base 112. In the shown embodiment, six holes are provided: two at the upper portion, two at the lower portion and two centrally of the base 112'.

In order to increase stability of the assembled joint, each of the discs 114' is provided with an extension 114c' so that they exhibit a long, planar surface abutting the base of the second joint part. In other words, the discs 114' abut the base of the second joint part across essentially the entire width thereof.

A co-planar locating cut-out 118' extends from the base at the lower half portion thereof. This locating cut-out 118' has a position and a size to cooperate with a locating tab provided in the second joint part, as explained below.

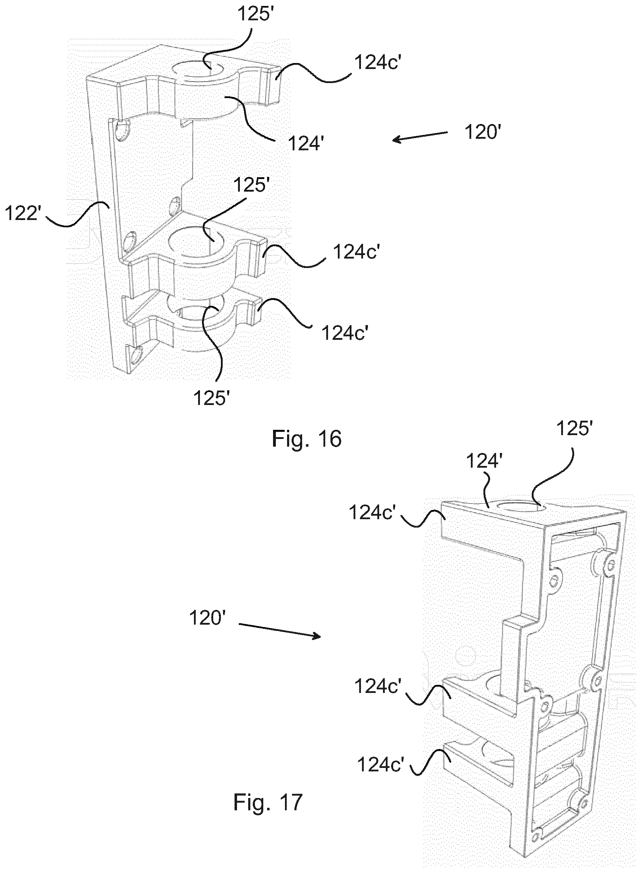

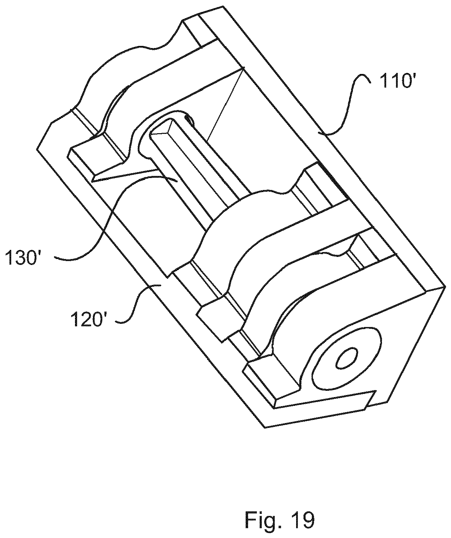

Figs. 16 and 17 show a perspective views of an alternative embodiment of a second joint part 120', attached to a second, short frame section 20, see Fig. 1. The second joint part comprises a base 122', which is adapted to be fastened to a frame section. A plurality of discs 124', in the shown example three discs, extend perpendicularly from the base 122'. The discs are provided, one above the other as seen in assembled state, so that they form an array of discs 124'. Each of the discs 124' comprises a hole, preferably a circular hole 125', arranged essentially centrally in the disc. Like in the first joint part 110', the holes have a successively smaller diameter, seen from the bottom one and up to the top one. The discs 124' of the second joint part 120' are arranged on the base 122' so that they are staggered in relation to the discs 114' of the first joint part 110 'when the bases 112', 122' of the first and second joint parts 110', 120' are in alignment, i.e., when the upper and lower edges of the bases are at the same height. However, in this embodiment the discs 115', 125' are unevenly spaced, so that there will be a gap there between, see Fig. 19.

The second joint part 120 is attached to the frame section by means of a plurality of screws extending through a respective hole 126' in the base 122'. In the shown embodiment, six holes are provided: two at the upper portion, two at the lower portion and two centrally of the base 112'.

A locating tab 128' is provided in the base 122' at the upper half portion thereof. This locating tab 128' has a position and a size to cooperate with the locating cut-out 118' provided on the first joint part.

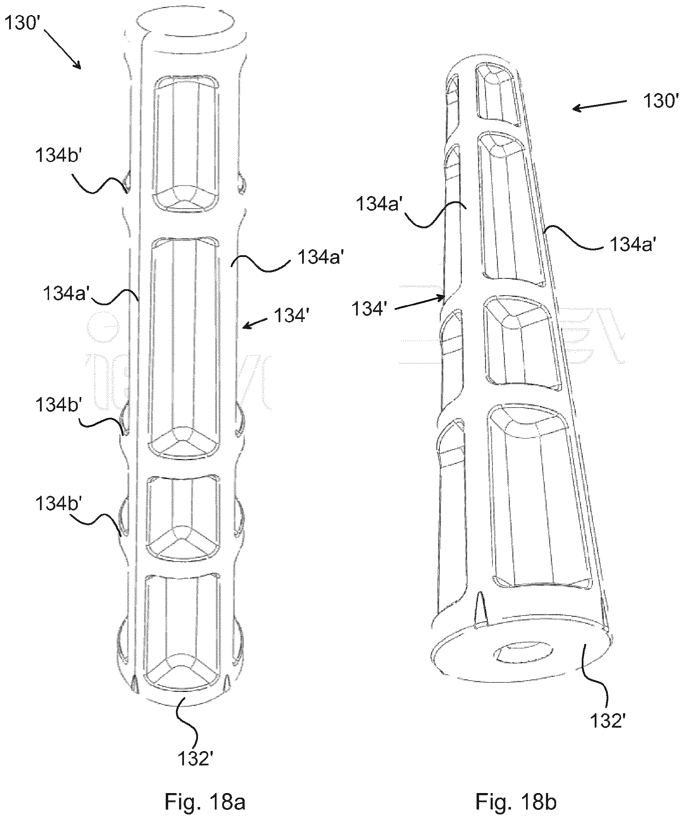

Referring now to Figs. 18a and 18b, a second embodiment of a pin 130' is provided with a circular base 132', from which a tapering stem portion 134' extends. In this embodiment, the stem portion is made up of a plurality of flanges 134a, in this embodiment four flanges. The flanges 134a are provided so that they extend evenly spaced from the centerline of the stem portion 134. In other words, the cross-sectional shape of the stem portion 134' is cross-shaped in this embodiment except at reinforcing platforms 134b', where the cross-sectional shape of the stem portion 134' is circular. Thereby, a pin with low weight is provided with essentially maintained strength. Also, the cross-sectional shape assists cooling the pin during manufacturing.

The circular base 132 is provided with a centrally located threaded hole adapted to receive a screw of a leg (not shown in this figure).

The assembled joint comprising the first joint part 110', the second joint part 120', and the pin 130' is shown in Fig. 19. The method of assembling this second embodiment is the same as for the first embodiment except for the omission of the locking of an engagement recess and an engagement tongue.

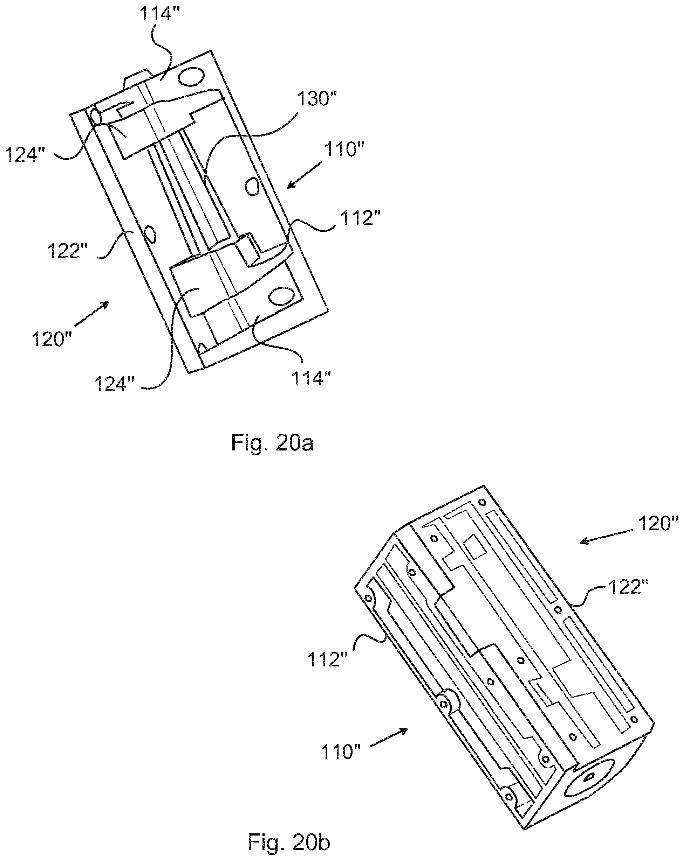

Yet an alternative embodiment of joint parts will now be described with reference to Figs. 20a and 20b. The general design and function of this alternative embodiment is the same as for the embodiments described above. Thus, the first joint part 110" comprises a base 112" which is adapted to be fastened to a first, long frame section 10, see Fig. 1. A plurality of discs 114", in the shown example two discs, extend perpendicularly from the base 112". The discs are provided, one above the other as seen in assembled state, so that they form an array of discs. Each of the discs 114" is provided with a hole, preferably a circular hole (not shown in these figures), arranged essentially centrally in the disc. The holes have a successively smaller diameter, seen from the bottom one and up to the top one. Unlike in the first embodiment, the thickness of the discs is not the same for all the discs. Instead, they have a non-uniform thickness, wherein the discs are thicker close to the base 112" than at the end remote from the base. Also, the discs are thinner close to the base of a second joint part 120" to which the first joint part 110" is joined.

This second joint part 120" is adapted to be attached to a second, short frame section 20, see Fig. 1. The second joint part comprises a base 122", which is adapted to be fastened to a frame section. A plurality of discs 124", in the shown example two discs, extend perpendicularly from the base 122". The discs are provided, one above the other as seen in assembled state, so that they form an array of discs. Each of the discs 124" comprises a hole, preferably a circular hole (not shown in these figures), arranged essentially centrally in the disc. Like in the first joint part 110", the holes have a successively smaller diameter, seen from the bottom one and up to the top one. The discs 124" of the second joint part 120" are arranged on the base 122" so that they are positioned between the discs 114" of the first joint part 110" when the bases 112", 122" of the first and second joint parts 110", 120" are in alignment, i.e., when the upper and lower edges of the bases are at the same height. A tapering pin 130" will hold the two joint parts together after insertion into the holes of the joint parts.

Also, the discs of the second joint part 120" have a non-uniform thickness, wherein the discs are thicker close to the base 122" than at the end remote from the base. The discs 124" are thinner close to the base of the first joint part 110" to which the second joint part 120" is joined. This facilitates the joining of the two joint parts 110", 120", since the slanting surfaces will guide the two joint parts when moved together.

Preferred embodiments of a bed frame joint, a bed frame, a bed and a method of assembling a bed frame has been described It will be realized that these may be varied without departing from the inventive idea as defined in the appended claims. For example, the stem portion has been described as comprising four or six flanges. This number may of course vary, such as eight flanges. Also, the stem portion can be provided as a solid tapering circular block.

Also, the holes in the discs and consequently the cross-sectional shape of the pin may be non-circular, such as elliptic, as long as firm engagement is achieved.

In the described embodiments, the entire stem portion of the pin is tapering. However, the same function can be achieved if only part of the stem portion is tapering, such as the upper portion thereof. Thus, is will be realized that when referring to a tapering pin, only part thereof has to be tapering. Correspondingly, only some of the holes in the discs have to be of successively smaller diameter.

It will also be appreciated that features from the three main embodiments may be exchanged. For example, the discs of the first embodiment may be provided with extensions described in connection with the second embodiment. Also, the thickness of the discs of the first embodiment may be different between different discs and the thickness of the discs of the second embodiment may be the same for all discs.

In Fig. 13, a leg 140 is shown attached to the pin 130 by means of a screw connection. It will be appreciated that a leg is attached to the pins of all embodiments, although not expressly shown in the figures. It will also be appreciated that alternative ways of attaching the leg to the pin may be provided, such as by gluing. The pin and the leg may also be permanently joined so as to form a single part when assembling the bed frame.

## Claims

1. A bed frame joint (100) comprising
- a first joint part (110; 110'; 110"),
- a second joint part (120; 120'; 120"),
- a pin (130; 130') extending through the first and second joint parts, and
- a leg (140)
wherein the first and second joint parts (110, 120; 110', 120'; 110", 120") are provided with a plurality of discs (114, 124; 114', 124'; 114", 124") overlaying each other,
wherein each of the discs (114, 124; 114', 124'; 114", 124") is provided with a hole (115, 125; 115', 125') with progressively smaller diameter, and
wherein the pin (130; 130'; 130") is tapered,
**characterized by** the leg (140) attached to the pin (130; 130'; 130") of each joint (100), wherein the pin (130; 130') is provided with a circular base (132; 132'), from which a tapering stem portion (134; 134') extends, and
wherein the circular base (132; 132') is provided with a centrally located threaded hole adapted to receive a screw of the leg (140).

2. The frame joint according to claim 1, wherein each of the first and second joint parts (110, 120; 110', 120'; 110", 120") comprises a base (112, 122; 112', 122'; 112", 122") and the discs (114, 124; 114', 124'; 114", 124") extend perpendicularly from the base.

3. The frame joint according to claim 1 or 2, wherein the holes (115, 125; 115', 125') are circular.

4. The frame joint according to any one of claims 1-3, wherein the sides of the holes (115, 125; 115', 125') are perpendicular to the plane of the discs.

5. The frame joint according to any one of claims 1-4, wherein one of the joint parts (110; 120') comprises a co-planar locating tab (118; 128') extending from the base (112; 122') and having a position and a size to cooperate with a locating recess (128; 118') provided in the other joint part.

6. The frame joint according to any one of claims 1-5, wherein one of the joint parts (110) comprises an engagement tongue (123) extending from the base (122) at essentially right angle thereto to engage an engagement recess (113) on the back of the base (112) of the other joint part.

7. The frame joint according to any one of claims 1-6, wherein each of the discs (114'; 124') is provided with an extension (114c'; 124c') so that they exhibit a planar surface abutting the base of the other joint part.

8. The frame joint according to claim 1, wherein the stem portion (134; 134') is made up of a plurality of flanges (134a, 134a') extending evenly spaced from a centerline of the stem portion.

9. The frame joint according to any one of claims 1-8, wherein the discs (114", 124") have a non-uniform thickness, wherein the discs preferably are thicker close to the base (112", 122") than at the end remote from the base and wherein the discs preferably are thinner close to the base of the joint part to which the joint part in question is joined.

10. A bed frame (1) comprising four frame sections (10, 20) and a bed frame joint (100) according to any one of claims 1-9 provided at each intersection between two adjacent frame sections (10, 20).

11. A bed comprising a bed frame according to claim 10.

12. A method of assembling a bed frame joint according to any one of claims 1-9, comprising the following steps:
- aligning the holes (115, 125; 115', 125') of the first and second joint parts (110, 120; 110', 120'; 110", 120");
- inserting the pin (130; 130'; 130") with a leg (140) attached to the pin (130; 130'; 130") of each joint (100) into the holes; and
- applying a pressure to the pin (130; 130'; 130") until fully inserted into the holes, wherein the pressure preferably is at least partly provided by the weight of the bed frame.

13. The method according to claim 12, wherein the step of applying a pressure to the pin (130; 130') includes slightly deforming the rims of the holes (115, 125; 115', 125').

## Patentansprüche

1. Bettrahmenverbindung (100), umfassend
- ein erstes Verbindungsteil (110; 110'; 110"),
- ein zweites Verbindungsteil (120; 120'; 120"),
- einen Stift (130; 130'), der sich durch das erste und zweite Verbindungsteil erstreckt, und
- ein Bein (140),
wobei das erste und zweite Verbindungsteil (110, 120; 110', 120'; 110", 120") mit mehreren Scheiben (114, 124; 114', 124', 114", 124") versehen sind, die übereinander liegen,
wobei jede der Scheiben (114, 124; 114', 124', 114", 124") mit einem Loch (115, 125; 115', 125') mit zunehmend kleinerem Durchmesser versehen ist und
wobei der Stift (130; 130', 130") konisch ist,
**dadurch gekennzeichnet, dass**
das Bein (140) an dem Stift (130; 130', 130") jeder Verbindung (100) befestigt ist, wobei der Stift (130; 130') mit einer kreisförmigen Basis (132; 132') versehen ist, von der aus sich ein konisch zulaufender Stielabschnitt (134; 134') erstreckt, und
wobei die kreisförmige Basis (132; 132') mit einen zentral gelegenen Gewindeloch versehen ist, das ausgebildet ist, eine Schraube des Beins (140) aufzunehmen.

2. Rahmenverbindung nach Anspruch 1, wobei jedes der ersten und zweiten Verbindungsteile (110, 120; 110', 120'; 110", 120") eine Basis (112, 122; 112', 122'; 112", 122") umfasst und die Scheiben (114, 124; 114', 124', 114", 124") sich senkrecht von der Basis erstrecken.

3. Rahmenverbindung nach Anspruch 1 oder 2, wobei die Löcher (115, 125; 115', 125') kreisförmig sind.

4. Rahmenverbindung nach einem der Ansprüche 1-3, wobei die Seiten der Löcher (115, 125; 115', 125') senkrecht zur Ebene der Scheiben sind.

5. Rahmenverbindung nach einem der Ansprüche 1-4, wobei eines der Verbindungsteile (110; 120") eine komplanare Positionierungslasche (118; 128') umfasst, die sich von der Basis (112; 122') erstreckt und eine Position und Größe aufweist, um mit einer Positionierungsaussparung (128; 118') zusammenzuwirken, die in dem anderen Verbindungsteil vorgesehen ist.

6. Rahmenverbindung nach einem der Ansprüche 1-5, wobei eines der Verbindungsteile (110) eine Eingriffszunge (123) umfasst, die sich von der Basis (122) in einem im Wesentlichen rechten Winkel zu dieser erstreckt, um mit einer Eingriffsaussparung (113) an der Rückseite der Basis (112) des anderen Verbindungsteils in Eingriff zu gelangen.

7. Rahmenverbindung nach einem der Ansprüche 1-6, wobei jede der Scheiben (114'; 124') mit einer Verlängerung (114c'; 124c') versehen ist, sodass sie eine ebene Oberfläche aufweisen, die an der Basis des anderen Verbindungsteils anliegt.

8. Rahmenverbindung nach Anspruch 1, wobei der Stielabschnitt (134, 134') aus mehreren Flanschen (134a, 134a') besteht, die sich mit gleichem Abstand von einer Mittellinie des Stielabschnitts erstrecken.

9. Rahmenverbindung nach einem der Ansprüche 1-8, wobei die Scheiben (114", 124") eine ungleichförmige Dicke aufweisen, wobei die Scheiben vorzugsweise nahe der Basis (112", 122") dicker sind als an dem Ende fern der Basis und wobei die Scheiben vorzugsweise nahe der Basis des Verbindungsteils dünner sind, mit dem das fragliche Verbindungsteil verbunden ist.

10. Bettrahmen (1), umfassend vier Rahmenabschnitte (10, 20) und eine Bettrahmenverbindung (100) nach einem der Ansprüche 1-9, die an jedem Schnittpunkt zwischen zwei benachbarten Rahmenabschnitten (10, 20) vorgesehen ist.

11. Bett, umfassend einen Bettrahmen nach Anspruch 10.

12. Verfahren zum Zusammenbauen einer Bettrahmenverbindung nach einem der Ansprüche 1-9, umfassend die folgenden Schritte:
- Ausrichten der Löcher (115, 125; 115', 125') der ersten und zweiten Verbindungsteile (110, 120; 110', 120'; 110", 120");
- Einsetzen des Stifts (130; 130', 130") mit einem Bein (140) an dem Stift (130; 130', 130") jeder Verbindung (100) befestigt, in die Löcher; und
- Ausüben eines Drucks auf den Stift (130; 130', 130"), bis er vollständig in die Löcher eingesetzt ist, wobei der Druck vorzugsweise mindestens teilweise durch das Gewicht des Bettrahmens vorgesehen ist.

13. Verfahren nach Anspruch 12, wobei der Schritt zum Ausüben eines Drucks auf den Stift (130; 130') ein leichtes Verformen der Ränder der Löcher (115, 125; 115', 125') beinhaltet.

## Revendications

1. Joint de cadre de lit (100) comprenant
- une première partie joint (110 ; 110' ; 110"),
- une seconde partie joint (120 ; 120' ; 120"),
- une broche (130 ; 130') s'étendant à travers les première et seconde parties joint, et
- un pied (140)
dans lequel les première et seconde parties joint (110, 120 ; 110', 120' ; 110", 120") sont dotées d'une pluralité de disques (114, 124 ; 114', 124' ; 114", 124") superposés les uns sur les autres,
dans lequel chacun des disques (114, 124 ; 114', 124' ; 114", 124") est doté d'un trou (115, 125 ; 115', 125') d'un diamètre décroissant progressivement, et
dans lequel la broche (130 ; 130' ; 130") est conique,
**caractérisé en ce que**
le pied (140) est fixé à la broche (130 ; 130' ; 130") de chaque joint (100),
dans lequel la broche (130 ; 130') est dotée d'une base circulaire (132 ; 132'), à partir de laquelle une partie tige conique (134 ; 134') s'étend, et
dans lequel la base circulaire (132 ; 132') est dotée d'un trou fileté situé au centre conçu pour recevoir une vis du pied (140).

2. Joint de cadre selon la revendication 1, dans lequel chacune des première et seconde parties joint (110, 120 ; 110', 120' ; 110", 120") comprend une base (112, 122 ; 112', 122' ; 112", 122") et les disques (114, 124 ; 114', 124' ; 114", 124") s'étendent perpendiculairement depuis la base.

3. Joint de cadre selon la revendication 1 ou 2, dans lequel les trous (115, 125 ; 115', 125') sont circulaires.

4. Joint de cadre selon l'une quelconque des revendications 1 à 3, dans lequel les faces des trous (115, 125 ; 115', 125') sont perpendiculaires au plan des disques.

5. Joint de cadre selon l'une quelconque des revendications 1 à 4, dans lequel l'une des parties joint (110; 120') comprend une patte de positionnement coplanaire (118 ; 128') s'étendant depuis la base (112; 122') et ayant une position et une taille pour coopérer avec un évidement de positionnement (128 ; 118') prévu dans l'autre partie joint.

6. Joint de cadre selon l'une quelconque des revendications 1 à 5, dans lequel l'une des parties joint (110) comprend une languette de mise en prise (123) s'étendant depuis la base (112) à sensiblement angle droit avec celle-ci pour mettre en prise un évidement de mise en prise (113) sur l'arrière de base (112) de l'autre partie joint.

7. Joint de cadre selon l'une quelconque des revendications 1 à 6, dans lequel chacun des disques (114' ; 124') est doté d'une extension (114c' ; 124c') de manière à présenter une surface plane venant en butée contre la base de l'autre partie joint.

8. Joint de cadre selon la revendication 1, dans lequel la partie tige (134 ; 134') est constituée d'une pluralité de brides (134a, 134a') s'étendant de manière régulièrement espacée depuis une ligne centrale de la partie tige.

9. Joint de cadre selon l'une quelconque des revendications 1 à 8, dans lequel les disques (114", 124") ont une épaisseur non uniforme, dans lequel les disques sont de préférence plus épais à proximité de la base (112", 122") qu'à l'extrémité distante de la base et dans lequel les disques sont de préférence plus fins à proximité de la base de la partie joint à laquelle la partie joint en question est assemblée.

10. Cadre de lit (1) comprenant quatre sections cadre (10, 20) et un joint de cadre de lit (100) selon l'une quelconque des revendications 1 à 9 prévu à chaque intersection entre deux sections cadre adjacentes (10, 20).

11. Lit comprenant un cadre de lit selon la revendication 10.

12. Procédé d'assemblage d'un joint de cadre de lit selon l'une quelconque des revendications 1 à 9, comprenant les étapes suivantes :
- alignement des trous (115, 125 ; 115', 125') des première et seconde parties joint (110, 120 ; 110', 120' ; 110", 120") ;
- insertion de la broche (130; 130' ; 130") dotée d'un pied (140) fixé à la broche (130 ; 130' ; 130") de chaque joint (100) dans les trous ; et
- application d'une pression sur la broche (130 ; 130' ; 130") jusqu'à ce qu'elle soit complètement insérée dans les trous, dans lequel la pression est de préférence au moins en partie fournie par le poids du cadre de lit.

13. Procédé selon la revendication 12, dans lequel l'étape d'application d'une pression sur la broche (130; 130') comprend une légère déformation des bords des trous (115, 125 ; 115', 125').
